# EUROPEAN PATENT APPLICATION

(11) **EP 4 488 507 A1**
(43) Date of publication of application: **08.01.2025**
(21) Application number: 23817284.5
(22) Date of filing: 10.11.2023
(51) Int. Cl.: F03D 7/02, F03D 17/00, H02J 9/06

(54) **PARAMETER COLLECTION APPARATUS AND SYSTEM FOR WIND TURBINE GENERATOR UNIT**

(30) Priority: 17.05.2023 CN 202321189313 U
(71) Applicant: China Three Gorges Renewables (Group) Co., Ltd., Beijing 101199 (CN)
(72) Inventor: LV, Pengyuan, Beijing 101199 (CN); WANG, Qian, Beijing 101199 (CN); CHAI, Zhaorui, Beijing 101199 (CN); LAN, Jinjiang, Beijing 101199 (CN); LIU, Mingzhe, Beijing 101199 (CN); GENG, Chaoyue, Beijing 101199 (CN); SUO, Lele, Beijing 101199 (CN); ZHOU, Tong, Beijing 101199 (CN); WU, Jianyong, Beijing 101199 (CN)
(74) Representative: Elzaburu S.L.P.
(86) International application number: PCT/CN2023/131085
(87) International publication number: WO 2024/234588

(57) **Abstract**

The present application provides a parameter acquisition apparatus and system for a wind turbine generator set, and relates to the technical field of wind power generation. The parameter acquisition apparatus for the wind turbine generator set includes a main controller, a key parameter acquisition module, a communication module, a first changeover switch, a first standby power source, a second changeover switch and a second standby power source; where the main controller is configured to respectively control the first changeover switch to be closed and the second changeover switch to be closed when an emergency acquisition mode is determined, so that the first standby power source supplies power to the main controller and the second standby power source supplies power to the key parameter acquisition module; the main controller is further configured to control the key parameter acquisition module to acquire a key parameter of the wind turbine generator set, and output the key parameter through the communication module. Even if the wind turbine generator set is prone to a phenomenon of network disconnection or power outage due to typhoon, the main controller can still control the key parameter acquisition module to acquire the key parameter of the wind turbine generator set.

## Description

This application claims priority to Chinese Patent Application No. 202321189313.7, filed with China National Intellectual Property Administration on May 17, 2023 and titled "Parameter Acquisition Apparatus and System for Wind Turbine Generator Set", the disclosure of which is incorporated herein by reference in its entirety.

### TECHNICAL FIELD

The present application relates to wind power generation technology and, in particular, to a parameter acquisition apparatus and system for a wind turbine generator set.

### BACKGROUND

The wind turbine generator set is electric equipment, according to which wind energy is converted into mechanical work driving a rotor to rotate to finally output alternating current. At present, the piling of the wind turbine generator set is generally set at sea, so that the wind turbine generator set can generate wind power at sea. Although setting the wind turbine generator at sea can achieve the stability of wind energy resources and will not occupy land resources, the wind turbine generator set is easily eroded by typhoon and damaged by typhoon. Therefore, it is necessary for maintenance personnel to timely analyze, after the typhoon, whether the typhoon has caused damage to the wind turbine generator set.

In the prior art, in the analysis process, the maintenance personnel need to acquire a vibration parameter, an inclination angle and a load parameter of the wind turbine generator set during the typhoon, and transmit through the network the vibration parameter, the inclination angle and the load parameter of the wind turbine generator set to a terminal device for display, so that the maintenance personnel can analyze whether the typhoon causes damage to the wind turbine generator set. However, during the typhoon, the wind turbine generator set may be prone to a phenomenon of network disconnection or power outage, which will lead to a failure to acquire the vibration parameter, the inclination angle and the load parameter of the wind turbine generator set during the analysis process so that the maintenance personnel cannot perform rapid analysis processing timely with respect to whether the wind turbine generator set is damaged.

### SUMMARY

The present application provides a parameter acquisition apparatus and system for a wind turbine generator set, which are used for solving the problem that the wind turbine generator set cannot acquire or transmit a vibration parameter, an inclination angle and a load parameter due to a phenomenon of network disconnection and power outage during the typhoon.

In the first aspect, the present application provides a parameter acquisition apparatus for a wind turbine generator set, the apparatus including a main controller, a key parameter acquisition module, a communication module, a first changeover switch, a first standby power source, a second changeover switch and a second standby power source; where the main controller is electrically connected with the key parameter acquisition module, the first changeover switch, the second changeover switch and the communication module respectively; where the first standby power source, the first changeover switch and the main controller are electrically connected in turn, and the second standby power source, the first changeover switch and the key parameter acquisition module are electrically connected in turn; where the main controller is configured to respectively control the first changeover switch to be closed and the second changeover switch to be closed when an emergency acquisition mode is determined, so that the first standby power source supplies power to the main controller and the second standby power source supplies power to the key parameter acquisition module; the main controller is further configured to control the key parameter acquisition module to acquire a key parameter of the wind turbine generator set and output the key parameter through the communication module; where the key parameter includes at least one of the following categories: a vibration parameter, an inclination angle and a load parameter.

In a possible implementation, the vibration parameter includes a waving vibration amplitude, a swinging vibration amplitude, a coupling vibration amplitude, and an inherent frequency of a blade of the wind turbine generator set; the key parameter acquisition module includes a first vibration parameter acquisition module arranged on the blade of the wind turbine generator set;
the first vibration parameter acquisition module is configured to acquire the waving vibration amplitude, swinging vibration amplitude, the coupling vibration amplitude and the inherent frequency of the blade of the wind turbine generator set.

In this way, the main controller can control the first vibration parameter acquisition module to acquire the waving vibration amplitude, the swinging vibration amplitude, the coupling vibration amplitude and the inherent frequency of the blade of the wind turbine generator set, so that the wind turbine generator set can provide maintenance personnel with data for determining whether the wind turbine generator set is damaged.

In a possible implementation, the load parameter includes a load parameter of a blade of the wind turbine generator set, and the key parameter acquisition module includes a first load parameter acquisition module arranged on the blade of the wind turbine generator set; the first load parameter acquisition module is configured to acquire the load parameter of the blade of the wind turbine generator set.

In this way, the main controller can control the first load parameter acquisition module to acquire the load parameter of the blade of the wind turbine generator set, so that the wind turbine generator set can provide maintenance personnel with data for determining whether the wind turbine generator set is damaged.

In a possible implementation, the first load parameter acquisition module is arranged at a root part and/or a middle part of the blade. In this way, the main controller can control the first load parameter acquisition module to acquire the load parameter of the root part and/or middle part of the blade of the wind turbine generator set, so that the wind turbine generator set can provide maintenance personnel with data for determining whether the wind turbine generator set is damaged.

In a possible implementation, the vibration parameter includes a vibration parameter of a nacelle of the wind turbine generator set; the key parameter acquisition module includes a second vibration parameter acquisition module arranged at the nacelle of the wind turbine generator set; the second vibration parameter acquisition module is configured to acquire the load parameter of the nacelle of the wind turbine generator set.

In this way, the main controller can acquire the load parameter of the nacelle of the wind turbine generator set, so that the wind turbine generator set can provide maintenance personnel with data for determining whether the wind turbine generator set is damaged.

In a possible implementation, the load parameter includes a load parameter of a tower of the wind turbine generator set, and the key parameter acquisition module includes a second load parameter acquisition module arranged at the tower of the wind turbine generator set; the second load parameter acquisition module is configured to acquire the load parameter of the tower of the wind turbine generator set.

In this way, the main controller can acquire the load parameter of the tower of the wind turbine generator set, so that the wind turbine generator set can provide maintenance personnel with data for determining whether the wind turbine generator set is damaged.

In a possible implementation, the inclination angle includes an inclination angle of a tower of the wind turbine generator set, and the key parameter acquisition module includes an inclination angle acquisition module arranged at the tower of the wind turbine generator set; the inclination angle acquisition module is configured to acquire the inclination angle of the tower of the wind turbine generator set.

In this way, the inclination angle acquisition module can acquire the inclination angle of the tower of the wind turbine generator set, so that the wind turbine generator set can provide maintenance personnel with data for determining whether the wind turbine generator set is damaged.

In a possible implementation, the key parameter acquisition module includes an inclination angle acquisition module and a second load parameter acquisition module arranged at a tower of the wind turbine generator set, a second vibration parameter acquisition module arranged at a nacelle of the wind turbine generator set, and a first vibration parameter acquisition module and a first load parameter acquisition module arranged at a blade of the wind turbine generator set;
the first vibration parameter acquisition module or the second load parameter acquisition module is in communicative connection with the second vibration parameter acquisition module, and the second vibration parameter acquisition module is in communicative connection with the inclination angle acquisition module and the second load parameter acquisition module respectively,
where the main controller is specifically configured to transmit an emergency signal to the inclination angle acquisition module and the second load parameter acquisition module of the tower in case of the emergency acquisition mode, to trigger the inclination angle acquisition module of the tower to acquire the inclination angle of the tower and control the second load parameter acquisition module to acquire the load parameter of the tower;
the inclination angle acquisition module or the second load parameter acquisition module is configured to transmit an emergency signal to the second vibration parameter acquisition module, to trigger the second vibration parameter acquisition module to acquire the load parameter of the nacelle;
the second vibration parameter acquisition module is configured to transmit the emergency signal to the first vibration parameter acquisition module and the first load parameter acquisition module, to trigger the first vibration parameter acquisition module to acquire the vibration parameter of the blade and trigger the first load parameter acquisition module to acquire the load parameter of the blade.

In this way, it can be ensured that the inclination angle acquisition module, the second load parameter acquisition module, the second vibration parameter acquisition module, the first vibration parameter acquisition module and the first load parameter acquisition module respectively acquire corresponding data.

In a possible implementation, a surface of the key parameter acquisition module is provided with a sealing layer. The sealing layer is set on the surface of the key parameter acquisition module to prevent the erosion of the scorching sun and rain.

In the second aspect, the present application also provides a parameter acquisition system for a wind turbine generator set, the system includes the wind turbine generator set and the parameter acquisition apparatus for the wind turbine generator set according to the first aspect installed on the wind turbine generator set.

The parameter acquisition apparatus and system for the wind turbine generator set provided by the present application respectively control the first changeover switch to be closed and the second changeover switch to be closed when the emergency acquisition mode is determined, so that the first standby power source supplies power to the main controller and the second standby power source supplies power to the key parameter acquisition module. In this way, even if the wind turbine generator set is prone to a phenomenon of network disconnection or power outage due to typhoon, the main controller can still control the key parameter acquisition module to acquire the key parameter of the wind turbine generator set, and output the key parameter through the communication module, so that the wind turbine generator set can provide maintenance personnel with data for determining whether the wind turbine generator set is damaged.

### BRIEF DESCRIPTION OF DRAWINGS

The accompanying drawings herein are incorporated in the specification and constitute a part of the present specification, which illustrate embodiments corresponding to the present application and serve to explain the principles of the present application together with the specification.
FIG. 1 is a block diagram illustrating connection of a parameter acquisition apparatus for a wind turbine generator set provided by an embodiment of the present application.
FIG. 2 is a schematic structural diagram illustrating a parameter acquisition system for a wind turbine generator set provided by an embodiment of the present application.
FIG. 3 is a block diagram illustrating circuit connection of a parameter acquisition apparatus for a wind turbine generator set provided by another embodiment of the present application.

Through the above drawings, specific embodiments of the present application have been shown, which will be described in more detail in the following. These drawings and text descriptions are not intended to limit the scope of the concept of the present application in any way, but to explain the concept of the present application to those skilled in the art with reference to the specific embodiments.

### DESCRIPTION OF EMBODIMENTS

In order to make the objects, technical solutions and advantages of the embodiment of the present utility model clearer, the technical solutions of the embodiment of the present utility model will be described clearly and comprehensively in conjunction with the drawings. Obviously, the described embodiments are a part of the embodiments of the present utility model, but not the whole embodiments. Generally, components of the embodiments of the present utility model described and shown in the drawings herein can be arranged and designed in various different configurations.

Therefore, the following detailed description of the embodiments of the present utility model provided in the drawings is not intended to limit the scope of the present utility model, but only to represent selected embodiments of the present utility model. Based on the embodiments of the present utility model, all other embodiments obtained by those of ordinary skill in the field without creative work belong to the protection scope of the present utility model.

It should be noted that similar symbols and letters indicate similar items in the following drawings, so once an item is defined in one drawing, it does not need to be further defined and explained in subsequent drawings.

In the description of the present utility model, it should be understood that the orientation or positional relationship indicated by the terms such as "center", "upper", "lower", "left", "right", "vertical", "horizontal", "inside" and "outside" etc. is based on the orientation or positional relationship shown in the drawings, or is the orientation or positional relationship according to which the product of the present utility model is commonly placed when used, or is the orientation or positional relationship commonly known by the skilled person, which is only for the convenience of describing the present utility model and simplifying the description and does not indicate or imply that the stated equipment or elements must have a specific orientation, be constructed and operated in a specific orientation, and which thus cannot be understood as a limitation of the present utility model.

In addition, the terms "first", "second" and "third" etc. are only used to distinguish descriptions and cannot be understood as indicating or implying relative importance.

In the description of the present utility model, it should also be noted that unless otherwise specified and limited, the terms "set", "install", "connected with" and "connect" should be broadly understood, for example, they may indicate a fixed connection, a detachable connection or an integrated connection; they may indicate a mechanical connection or a connection; they may indicate a direct connection, or an indirect connection through an intermediate medium, or an internal connection between two elements. For those of ordinary skill in this field, the specific meanings of the above terms in the present utility model can be understood in specific situations.

At present, it is necessary to acquire a vibration parameter, an inclination angle and a load parameter of a wind turbine generator set during typhoon, and transmit them through a network to terminal equipment for display, so that maintenance personnel can analyze whether the typhoon has caused damage to the wind turbine generator set. However, during the typhoon, the wind turbine generator set may be prone to a phenomenon of network disconnection or power outage. In this way, the wind turbine generator set cannot acquire or transmit the vibration parameter, the inclination angle and the load parameter, so that the wind turbine generator set cannot provide maintenance personnel with data to determine whether the wind turbine generator set is damaged.

Based on the above technical problems, the inventive concept of the present application lies in that: even if the wind turbine generator set is prone to a phenomenon of network disconnection and power outage due to the typhoon, a main controller 101 can still control a key parameter acquisition module 104 to acquire a key parameter of the wind turbine generator set, and output the key parameter through a communication module 107, so that the wind turbine generator set can provide maintenance personnel with data to determine whether the wind turbine generator set is damaged.

The technical solution of the present application and how the technical solution of the present application can solve the above technical problems will be described in detail with specific embodiments. The following specific embodiments can be combined with each other, and the same or similar concepts or processes may not be repeated in some embodiments. Embodiments of the present application will be described below with reference to the accompanying drawings.

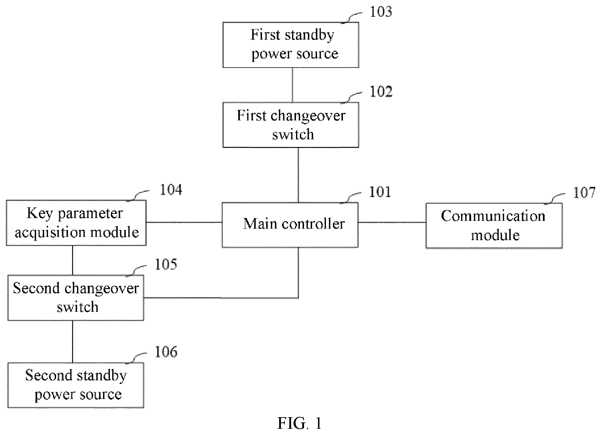

FIG. 1 is a block diagram illustrating circuit connection of a parameter acquisition apparatus for a wind turbine generator set provided by an embodiment of the present application. Referring to FIG. 1, an embodiment of the present application provides a parameter acquisition apparatus for a wind turbine generator set, the apparatus including a main controller 101, a key parameter acquisition module 104, a communication module 107, a first changeover switch 102, a first standby power source 103, a second changeover switch 105 and a second standby power source 106. The main controller 101 is electrically connected with the key parameter acquisition module 104, the first changeover switch 102, the second changeover switch 105 and the communication module 107 respectively; where the first standby power source 103, the first changeover switch 102 and the main controller 101 are electrically connected in turn, and the second standby power source 106, the second changeover switch 105 and the key parameter acquisition module 104 are electrically connected in turn. Exemplarily, the first standby power source 103 may be a storage battery, and the second standby power source 106 may be a variable-pitch power supply cabinet.

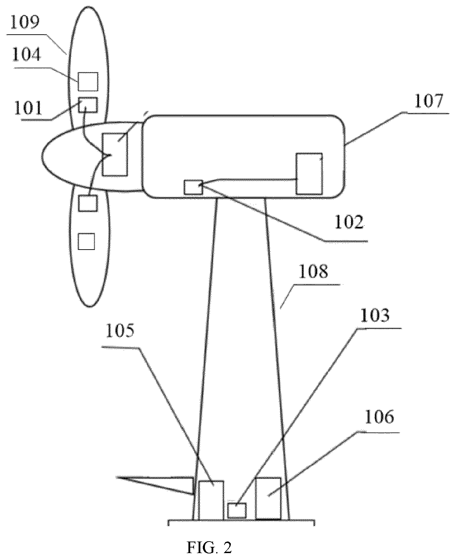

As shown in FIG. 2, the wind turbine generator set includes a blade 207, a nacelle 204, and a tower 202, where the blade 207 is connected to one side of the nacelle 204, and the tower 202 is connected to the bottom of the nacelle 204. A generator is arranged inside the tower 202. When being subjected to wind, the blade 207 rotates and drives a rotor of the generator to rotate to generate electricity, so that wind energy is converted into electric energy. The main controller 101 can be located at the bottom of the tower 202 of the wind turbine generator set.

The main controller 101 is configured to control the first changeover switch 102 to be closed and the second changeover switch 105 to be closed respectively when an emergency acquisition mode is determined, so that the first standby power source 103 supplies power to the main controller 101 and the second standby power source 106 supplies power to the key parameter acquisition module 104.

Exemplarily, a condition for the wind turbine generator set to be in the emergency acquisition mode includes: the main controller 101 of the wind turbine generator set enters a typhoon mode; or, the main controller 101 of the wind turbine generator set determines that there is a network disconnection; or, the main controller 101 of the wind turbine generator set determines that there is a power outage; or, the main controller 101 of the wind turbine generator set determines that a wind speed is greater than a set threshold.

The main controller 101 is also configured to control the key parameter acquisition module 104 to acquire a key parameter of the wind turbine generator set and output the key parameter through the communication module 107.

The key parameter includes at least one of the following categories: a vibration parameter, an inclination angle and a load parameter, and a sampling frequency for acquiring the vibration parameter, the inclination angle parameter and the load parameter can be but not limited to 50 HZ.

To sum up, the parameter acquisition apparatus for the wind turbine generator set provided by the embodiment of the present application controls the first changeover switch 102 and the second changeover switch 105 to be closed respectively when the emergency acquisition mode is determined, so that the first standby power source 103 supplies power to the main controller 101 and the second standby power source 106 supplies power to the key parameter acquisition module 104. In this way, even if the wind turbine generator set is prone to network disconnection or power outage due to the typhoon, the main controller 101 can still control the key parameter acquisition module 104 to acquire a key parameter of the wind turbine generator set, and output the key parameter through the communication module 107, so that the wind turbine generator set can provide maintenance personnel with data for determining whether the wind turbine generator set is damaged.

Exemplarily, the vibration parameter may include a waving vibration amplitude, a swinging vibration amplitude, a coupling vibration amplitude, and an inherent frequency of the blade 207 of the wind turbine generator set. FIG. 2 is a schematic structural diagram of a parameter acquisition system for a wind turbine generator set according to an embodiment of the present application. As shown in FIG. 2, the key parameter acquisition module 104 includes a first vibration parameter acquisition module 205 arranged on the blade 207 of the wind turbine generator set. The first vibration parameter acquisition module 205 is configured to acquire the waving vibration amplitude, the swinging vibration amplitude, the coupling vibration amplitude, and the inherent frequency of the blade 207 of the wind turbine generator set.

In this way, the main controller 101 can control the first vibration parameter acquisition module 205 to acquire the waving vibration amplitude, the swinging vibration amplitude, the coupling vibration amplitude, and the inherent frequency of the blade 207 of the wind turbine generator set, so that the wind turbine generator set can provide maintenance personnel with data for determining whether the wind turbine generator set is damaged. For example, when a maintainer browses that any one of the waving vibration amplitude, the swinging vibration amplitude and the coupling vibration amplitude of the blade 207 is greater than a set first amplitude threshold, or the inherent frequency of the blade 207 is decreased by an amount exceeding a set frequency threshold, it is determined that the blade 207 of the wind turbine generator set is at risk of being damaged.

Exemplarily, the load parameter includes a load parameter of the blade 207 of the wind turbine generator set. As shown in FIG. 2, the key parameter acquisition module 104 includes a first load parameter acquisition module 206 arranged on the blade 207 of the wind turbine generator set; the first load parameter acquisition module 206 is configured to acquire the load parameter of the blade 207 of the wind turbine generator set. In this way, the main controller 101 can control the first load parameter acquisition module 206 to acquire the load parameter of the blade 207 of the wind turbine generator set, so that the wind turbine generator set can provide maintenance personnel with data to determine whether the wind turbine generator set is damaged.

Exemplarily, the first load parameter acquisition module 206 is arranged at a root part and/or a middle part of the blade 207. In this way, the main controller 101 can control the first load parameter acquisition module 206 to acquire the load parameter of the root part and/or the middle part of the blade 207 of the wind turbine generator set, so that the wind turbine generator set can provide maintenance personnel with data for determining whether the wind turbine generator set is damaged. For example, when a maintainer browses that the load parameter of the root part of the blade 207 is greater than a set first load parameter threshold, it means that the blade 207 of the wind turbine generator set is damaged by the typhoon when the wind turbine generator set is in the emergency acquisition mode, so a determination is made that the blade 207 of the wind turbine generator set is at risk of being damaged, and the reliability thereof is high. For another example, when the maintainer browses that the load parameter of the middle part of the blade 207 is greater than the set first load parameter threshold, it means that the blade 207 of the wind turbine generator set is damaged by the typhoon when the wind turbine generator set is in the emergency acquisition mode, so a determination is made that the blade 207 of the wind turbine generator set is at risk of being damaged, and the reliability thereof is high.

Exemplarily, the vibration parameter includes a vibration parameter of the nacelle 204 of the wind turbine generator set. As shown in FIG. 2, the key parameter acquisition module 104 includes a second vibration parameter acquisition module 203 arranged at the nacelle 204 of the wind turbine generator set. The second vibration parameter acquisition module 203 is configured to acquire the load parameter of the nacelle 204 of the wind turbine generator set. In this way, the main controller 101 can acquire the load parameter of the nacelle 204 of the wind turbine generator set, so that the wind turbine generator set can provide maintenance personnel with data for determining whether the wind turbine generator set is damaged. For example, when the maintainer browses that the vibration amplitude of the nacelle 204 is greater than a set second amplitude threshold, or the inherent frequency of the nacelle 204 is decreased by an amount exceeding a set frequency threshold, it means that the typhoon has damaged the nacelle 204 of the wind turbine generator set when the wind turbine generator set is in the emergency acquisition mode, so a determination is made that the nacelle 204 of the wind turbine generator set is at risk of being damaged, and the reliability thereof is high.

Exemplarily, the load parameter includes a load parameter of the tower 202 of the wind turbine generator set. As shown in FIG. 2, the key parameter acquisition module 104 includes a second load parameter acquisition module arranged at the tower 202 of the wind turbine generator set; the second load parameter acquisition module is configured to acquire the load parameter of the tower 202 of the wind turbine generator set. In this way, the main controller 101 can acquire the load parameter of the tower 202 of the wind turbine generator set, so that the wind turbine generator set can provide maintenance personnel with data for determining whether the wind turbine generator set is damaged. For example, when a maintainer browses that the load parameter at the bottom of the tower 202 is greater than a set second load parameter threshold, the tower 202 of the wind turbine generator set is damaged by the typhoon when the wind turbine generator set is in the emergency acquisition mode, so a determination is made that the tower 202 of the wind turbine generator set is at risk of being damaged, and the reliability thereof is high.

Exemplarily, the inclination angle includes an inclination angle of the tower 202 of the wind turbine generator set. As shown in FIG. 2, the key parameter acquisition module 104 includes the inclination angle acquisition module 201 arranged at the tower 202 of the wind turbine generator set. The inclination angle acquisition module 201 is configured to acquire the inclination angle of the tower 202 of the wind turbine generator set. In this way, the inclination angle acquisition module 201 can acquire the inclination angle of the tower 202 of the wind turbine generator set, so that the wind turbine generator set can provide maintenance personnel with data for determining whether the wind turbine generator set is damaged. For a maintainer, when the inclination angle parameter at the bottom of the tower 202 of the wind turbine generator set is greater than a set inclination angle parameter threshold, it means that the tower 202 of the wind turbine generator set is damaged by the typhoon when the wind turbine generator set is in the emergency acquisition mode, so a determination is made that the tower 202 of the wind turbine generator set is at risk of being damaged, and the reliability thereof is high.

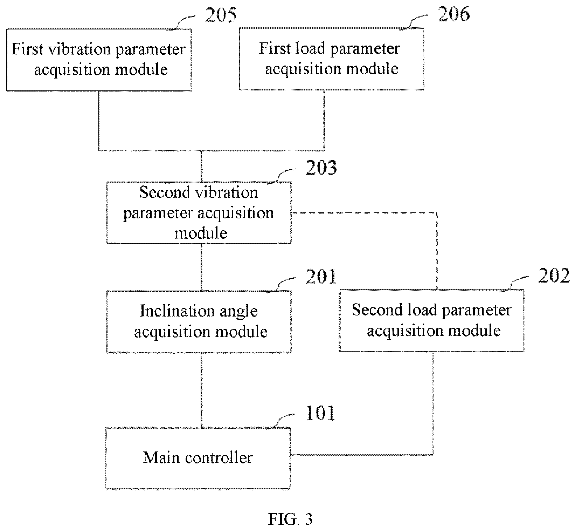

FIG. 3 is a block diagram illustrating circuit connection of a parameter acquisition apparatus for a wind turbine generator set provided by another embodiment of the present application. For example, in a parameter acquisition system for the wind turbine generator set provided by another embodiment of the present application, as shown in FIG. 3, the key parameter acquisition module 104 includes an inclination angle acquisition module 201 and a second load parameter acquisition module arranged at the tower 202 of the wind turbine generator set, a second vibration parameter acquisition module 203 arranged at the nacelle 204 of the wind turbine generator set, and a first vibration parameter acquisition module 205 and a first load parameter acquisition module 206 arranged at the blade 207 of the wind turbine generator set.

The first vibration parameter acquisition module 205 or the second load parameter acquisition module is in communicative connection with the second vibration parameter acquisition module 203, and the second vibration parameter acquisition module 203 is in communicative connection with the inclination angle acquisition module 201 and the second load parameter acquisition module respectively,
where the main controller 101 is specifically configured to transmit an emergency signal to the inclination angle acquisition module 201 and the second load parameter acquisition module of the tower 202 in case of the emergency acquisition mode, to trigger the inclination angle acquisition module 201 of the tower 202 to acquire the inclination angle of the tower 202 and control the second load parameter acquisition module to acquire the load parameter of the tower 202.

The inclination angle acquisition module 201 or the second load parameter acquisition module is configured to transmit an emergency signal to the second vibration parameter acquisition module 203, to trigger the second vibration parameter acquisition module 203 to acquire the load parameter of the nacelle 204.

The second vibration parameter acquisition module 203 is configured to transmit the emergency signal to the first vibration parameter acquisition module 205 and the first load parameter acquisition module 206, to trigger the first vibration parameter acquisition module 205 to acquire the vibration parameter of the blade 207 and trigger the first load parameter acquisition module 206 to acquire the load parameter of the blade 207.

In the embodiment of the present application, the above-mentioned vibration parameter acquisition mode can be as follows: when the main controller 101 determines that it is in the emergency acquisition mode, the main controller 101 starts a standby power source and informs the second load parameter acquisition module arranged at the tower 202 to acquire the load parameter of the tower 202 (where the load parameter may be an average value of sub load parameters acquired at a front side, a rear side, a left side and a right side of the tower 202) and the inclination angle parameter acquisition module arranged at the tower 202 to acquire the inclination angle parameter (the inclination angle parameter may be an average value of sub inclination angle parameters acquired at the front side and the rear side of the tower 202, or the inclination angle parameter may be an average value of sub inclination angle parameters acquired at the left side and right side of the tower 202). In addition, the second load parameter acquisition module or the inclination angle parameter acquisition module informs the second vibration parameter acquisition module 203 arranged at the nacelle 204 to acquire the second vibration parameter of the nacelle 204. Furthermore, the second vibration parameter acquisition module 203 of the nacelle 204 informs the first vibration parameter acquisition module 205 arranged on the blade 207 to acquire the vibration parameter of the blade 207, and informs the first load parameter acquisition module 206 arranged on the blade 207 to acquire the load parameter of the blade 207.

In this way, it can be ensured that the inclination angle acquisition module 201, the second load parameter acquisition module, the second vibration parameter acquisition module 203, the first vibration parameter acquisition module 205 and the first load parameter acquisition module 206 respectively acquire corresponding data.

The surface of the key parameter acquisition module 104 is provided with a sealing layer to prevent the erosion of the scorching sun and rain.

In addition, an embodiment of the present application also provides a parameter acquisition system for a wind turbine generator set, and the system includes the wind turbine generator set and the parameter acquisition apparatus for the wind turbine generator set installed on the wind turbine generator set.

Those skilled in the art will readily envisage of other embodiments of the present application after considering the specification and practicing the present utility model disclosed here. The present application is intended to cover any variations, uses or adaptations of the present application, which follow the general principles of the present application and include common knowledge or common technical means in this technical field that is not disclosed in the present application. The specification and embodiments are to be regarded as exemplary only, with the true scope and spirit of the present application being indicated by the following claims.

It should be understood that the present application is not limited to the precise structure described above and shown in the drawings, and various modifications and changes can be made without departing from the scope of the present application. The scope of the present application is limited only by the appended claims.

## Claims

1. A parameter acquisition apparatus for a wind turbine generator set, the apparatus comprising a main controller, a key parameter acquisition module, a communication module, a first changeover switch, a first standby power source, a second changeover switch and a second standby power source; wherein the main controller is electrically connected with the key parameter acquisition module, the first changeover switch, the second changeover switch and the communication module respectively; the first standby power source, the first changeover switch and the main controller are electrically connected in turn, and the second standby power source, the first changeover switch and the key parameter acquisition module are electrically connected in turn,
the main controller is configured to respectively control the first changeover switch to be closed and the second changeover switch to be closed when an emergency acquisition mode is determined, so that the first standby power source supplies power to the main controller and the second standby power source supplies power to the key parameter acquisition module;
the main controller is further configured to control the key parameter acquisition module to acquire a key parameter of the wind turbine generator set, and output the key parameter through the communication module;
wherein the key parameter comprises at least one of the following categories: a vibration parameter, an inclination angle and a load parameter.

2. The apparatus according to claim 1, wherein the vibration parameter comprises a waving vibration amplitude, a swinging vibration amplitude, a coupling vibration amplitude and an inherent frequency of a blade of the wind turbine generator set; the key parameter acquisition module comprises a first vibration parameter acquisition module arranged on the blade of the wind turbine generator set;
the first vibration parameter acquisition module is configured to acquire the waving vibration amplitude, the swinging vibration amplitude, the coupling vibration amplitude and the inherent frequency of the blade of the wind turbine generator set.

3. The apparatus according to claim 1, wherein the load parameter comprises a load parameter of a blade of the wind turbine generator set, and the key parameter acquisition module comprises a first load parameter acquisition module arranged on the blade of the wind turbine generator set;
the first load parameter acquisition module is configured to acquire the load parameter of the blade of the wind turbine generator set.

4. The apparatus according to claim 3, wherein the first load parameter acquisition module is arranged at a root part and/or a middle part of the blade.

5. The apparatus according to claim 1, wherein the vibration parameter comprises a vibration parameter of a nacelle of the wind turbine generator set; the key parameter acquisition module comprises a second vibration parameter acquisition module arranged at the nacelle of the wind turbine generator set;
the second vibration parameter acquisition module is configured to acquire the load parameter of the nacelle of the wind turbine generator set.

6. The apparatus according to claim 1, wherein the load parameter comprises a load parameter of a tower of the wind turbine generator set, and the key parameter acquisition module comprises a second load parameter acquisition module arranged at the tower of the wind turbine generator set;
the second load parameter acquisition module is configured to acquire the load parameter of the tower of the wind turbine generator set.

7. The apparatus according to claim 1, wherein the inclination angle comprises an inclination angle of a tower of the wind turbine generator set, and the key parameter acquisition module comprises an inclination angle acquisition module arranged at the tower of the wind turbine generator set;
the inclination angle acquisition module is configured to acquire the inclination angle of the tower of the wind turbine generator set.

8. The apparatus according to claim 1, wherein the key parameter acquisition module comprises: an inclination angle acquisition module and a second load parameter acquisition module arranged at a tower of the wind turbine generator set, a second vibration parameter acquisition module arranged at a nacelle of the wind turbine generator set, and a first vibration parameter acquisition module and a first load parameter acquisition module arranged at a blade of the wind turbine generator set;
the first vibration parameter acquisition module or the second load parameter acquisition module is in communicative connection with the second vibration parameter acquisition module, and the second vibration parameter acquisition module is in communicative connection with the inclination angle acquisition module and the second load parameter acquisition module respectively,
wherein the main controller is specifically configured to transmit an emergency signal to the inclination angle acquisition module and the second load parameter acquisition module of the tower in case of the emergency acquisition mode, to trigger the inclination angle acquisition module of the tower to acquire the inclination angle of the tower and control the second load parameter acquisition module to acquire the load parameter of the tower;
the inclination angle acquisition module or the second load parameter acquisition module is configured to transmit the emergency signal to the second vibration parameter acquisition module, to trigger the second vibration parameter acquisition module to acquire the load parameter of the nacelle;
the second vibration parameter acquisition module is configured to transmit the emergency signal to the first vibration parameter acquisition module and the first load parameter acquisition module, to trigger the first vibration parameter acquisition module to acquire the vibration parameter of the blade and trigger the first load parameter acquisition module to acquire the load parameter of the blade.

9. The apparatus according to any one of claims 1 to 7, wherein a surface of the key parameter acquisition module is provided with a sealing layer.

10. A parameter acquisition system for a wind turbine generator set, comprising: the wind turbine generator set; and the parameter acquisition apparatus for the wind turbine generator set according to any one of claims 1 to 9 installed on the wind turbine generator set.
